# FASCICULE DE BREVET EUROPEEN

(11) **EP 0 660 020 B1**
(45) Date de publication et mention de la délivrance du brevet: **02.09.1998**
(21) Numéro de dépôt: 94402850.5
(22) Date de dépôt: 12.12.1994
(51) Int. Cl.: F16L 11/12

(54) **Procédé pour la réalisation d'une protection antifeu à base de silicone et protection ainsi obtenue**
Verfahren zur Herstellung eines Feuerschutzes auf Siliconbasis und Feuerschutz
Manufacturing process for a fire protection on the base of silicone and fire protection

(30) Priorité: 20.12.1993 FR 9315287
(43) Date de publication de la demande: 28.06.1995
(73) Titulaire: AEROSPATIALE Société Nationale Industrielle, 75781 Paris Cédex 16 (FR); TECALEMIT FLEXIBLES S.A., F-41008 Blois Cédex (FR)
(72) Inventeur: Porte, Alain, F-31770 Colomiers (FR); Cros, François, F-31500 Toulouse (FR); Martinou, Jean-Marc, F-31240 l'Union (FR)
(74) Mandataire: Bonnetat, Christian

(56) Documents cités:
- DE-A- 2 453 238
- DE-A- 2 905 610
- DE-A- 3 942 354
- DE-B- 2 348 401
- US-A- 3 117 597
- US-A- 4 190 088

## Description

La présente invention concerne un procédé pour la réalisation d'une protection antifeu à base de silicone, ainsi que la protection antifeu obtenue par la mise en oeuvre de ce procédé.

On sait que le silicone présente des propriétés de résistance au feu et à la chaleur. Aussi, ces propriétés sont-elles depuis longtemps largement utilisées pour la protection contre le feu. Par exemple, il est connu de réaliser des enveloppes préfabriquées de silicone (gaines, coquilles, etc ...), qui sont par la suite mises en place sur les objets à protéger, ou bien d'utiliser des peintures au silicone, dont l'on revêt lesdits objets.

DE-A-2 453 238 décrit une protection antifeu comportant une enveloppe à base de silicone appliquée sur l'objet à protéger et couverte par une enveloppe à base d'un matériau fibreux résistant au feu.

Cependant, sous l'action d'un feu, le silicone présente à la longue l'inconvénient de devenir cassant, de se fendiller et de se morceler, de sorte que des morceaux desdites enveloppes ou desdits revêtements se détachent de ceux-ci, laissant à nu et sans protection contre le feu des portions des objets à protéger. Cet inconvénient est encore aggravé lorsque lesdits objets à protéger sont soumis à des vibrations, qui accélèrent la séparation de morceaux de la protection du reste de celle-ci.

Pour tenter de remédier à cet inconvénient et de conférer une plus grande résistance mécanique aux enveloppes et revêtements de protection antifeu à base de silicone, on a déjà pensé à incorporer des armatures fibreuses à l'intérieur desdites protections. De telles armatures peuvent se présenter sous la forme de fibres individuelles distribuées de façon aléatoire ou bien sous la forme de fibres organisées, par exemple un tissu. Cependant, ces armatures fibreuses sont constituées de fibres résistant au feu, dont la matière (verre, céramique, alumine, ...) est différente du silicone. Il en résulte que, sous l'action du feu, les fibres réagissent de façon différente de celle du silicone (par exemple en dilatation) et constituent à l'intérieur de la protection des passages de propagation du feu et des gaz chauds, de sorte que lesdites armatures, contrairement à l'objet général pour lequel elles sont prévues (accroissement de la résistance mécanique) peuvent participer et/ou aggraver le morcellement desdites armatures soumises à un feu prolongé. De plus, dans le cas où les objets à protéger sont soumis à des vibrations, lesdites armatures propagent lesdites vibrations à l'intérieur de la protection et accélèrent ledit morcellement.

Par ailleurs, on a déjà tenté d'accroître les propriétés antifeu du silicone en y incorporant des charges endothermiques. Cependant, ces charges endothermiques sont plus ou moins intrumescentes, de sorte que, sous l'action du feu, le silicone subit une augmentation de volume le fragilisant et l'accroissement de la résistance antifeu ainsi obtenue et bien souvent contrebalancé par une augmentation de la fragilité de la protection sous l'action du feu. De plus, de telles charges endothermiques incorporent généralement beaucoup d'eau, de sorte qu'il en résulte la corrosion des objets à protéger, lorsque ceux-ci sont métalliques.

On remarquera de plus que les protections antifeu connues, sous forme de peinture, sont faciles à appliquer, même sur des objets finis. Cependant, l'épaisseur du revêtement de peinture que l'on peut obtenir est généralement insuffisant pour garantir une protection antifeu satisfaisante. Les peintures antifeu ne peuvent donc procurer que des protections de courte durée contre des feux peu importants.

Inversement, les protections antifeu connues, sous forme d'enveloppes préfabriquées, peuvent présenter toute épaisseur désirée, mais en revanche elles peuvent présenter une masse et un encombrement excessifs et elles sont souvent difficiles à mettre en place sur des objets finis, notamment lorsque ceux-ci sont des tuyauteries rigides.

Si l'enveloppe de protection préfabriquée se présente sous la forme d'une gaine, qui doit être enfilée sur la tuyauterie et fixée à celle-ci par des colliers de serrage rapportés, cette gaine de protection doit avoir un diamètre intérieur tel qu'il soit possible de l'enfiler sur les raccords et les coudes de la tuyauterie. Ceci implique que le diamètre intérieur de la gaine soit plus grand que le diamètre extérieur de la tuyauterie. L'encombrement de la tuyauterie ainsi revêtue de la gaine peut poser des problèmes d'installation. De plus, lorsque la tuyauterie rigide comporte des coudes, ce qui est souvent le cas, il est difficile, voire impossible, d'enfiler ladite gaine si les coudes sont très serrés.

Par ailleurs, la gaine interdit de mettre en place des fixations par colliers ou peignes pour fixer ladite tuyauterie des parois.

En outre, du fait qu'il n'y a pas d'adhérence de la gaine de protection sur la surface de la tuyauterie, les vibrations engendrent une abrasion de celle-ci par la gaine, ce qui est néfaste à la tenue en fatigue de ladite tuyauterie.

De même, lorsque l'enveloppe de protection préfabriquée se présente sous la forme d'une gaine longitudinalement fendue ou bien de deux demi-coquilles, elle ne peut adhérer à ladite tuyauterie, de sorte qu'il en résulte l'abrasion de la tuyauterie, en cas de vibrations. De plus, une telle enveloppe est alors difficile à fabriquer pour des tuyauteries de forme complexe ou à section évolutive.

La présente invention a pour objet de remédier à ces inconvénients.

A cette fin, selon l'invention, le procédé pour la réalisation d'une protection antifeu à base de silicone, est remarquable en ce que :
a) on revêt un objet à protéger d'un élastomère de silicone non chargé, se présentant sous une forme pâteuse et adhérant audit objet ;
b) on procède à la polymérisation au moins partielle de l'élastomère de silicone dont est ainsi revêtu ledit objet ; après quoi
c) on revêt le revêtement de silicone au moins partiellement polymérisé d'une enveloppe fibreuse résistant au feu et n'adhérant pas audit revêtement de silicone.

Ainsi, la protection antifeu à base de silicone, conforme à la présente invention telle que définie dans la revendication 8, comporte :
- un revêtement interne de silicone non chargé appliqué sous une forme pâteuse et polymérisé, adhérant à un objet à protéger ; et
- une enveloppe fibreuse, résistant au feu et portée par ledit revêtement interne, sans y adhérer.

Lorsque la protection conforme à la présente invention est soumise à l'action d'une flamme, ladite enveloppe fibreuse protège le revêtement de silicone et maintient dans son intégralité le cocon de silice formé par ce revêtement de silicone sous l'action de la température, en l'empêchant de se morceler.

On remarquera de plus que :
- le silicone ne comportant ni charge endothermique, ni armature incorporée, il a moins tendance à se morceler et aucune corrosion de l'objet protégé n'est à craindre ;
- l'enveloppe fibreuse n'adhérant pas au revêtement de silicone, celui-ci peut se dilater dans ladite enveloppe fibreuse, sans induire des contraintes mécaniques dans ladite enveloppe ;
- le revêtement de silicone adhérant audit objet à protéger, il n'y a aucun risque d'abrasion de celui-ci par le silicone et l'efficacité de protection est optimale, même avec une faible épaisseur de silicone ;
- la protection antifeu conforme à la présente invention peut facilement être réalisée sur des objets finis, quelles que soient les formes géométriques de ceux-ci ;
- l'épaisseur de la protection antifeu selon l'invention, grâce à la nature pâteuse de l'élastomère, peut être facilement optimisée en fonction de l'efficacité de protection recherchée ; il en est de même de l'encombrement et de la masse de ladite protection ;
- la protection antifeu de l'invention peut être réalisée sur tout ou partie de l'objet à protéger.

Ledit élastomère de silicone pâteux peut être appliqué sur l'objet à protéger de toute manière appropriée. Cependant, avantageusement, cet élastomère est appliqué par projection au pistolet.

De préférence, la polymérisation prévue après l'application de l'élastomère de silicone pâteux n'est que partielle et, après la formation de ladite enveloppe fibreuse, on procède à une polymérisation totale du revêtement de silicone, de façon à communiquer à celui-ci ses propriétés mécaniques optimales.

L'enveloppe fibreuse, bien que pouvant être réalisée de toute façon connue, est avantageusement obtenue par enroulement hélicoïdal d'une bande tressée de fibres résistant au feu (verre, alumine, céramique, etc ...).

Afin de maintenir ladite enveloppe fibreuse et d'obtenir une surface externe ne risquant pas d'abraser des fixations de l'objet sur un support, il peut être avantageux que la protection conforme à la présente invention comporte de plus un revêtement de silicone non chargé polymérisé, recouvrant au moins partiellement ladite enveloppe fibreuse.

A cet effet, après réalisation de l'enveloppe fibreuse, on revêt au moins partiellement celle-ci d'un élastomère de silicone non chargé, par exemple par projection au pistolet. Dans ce cas, on ne procède qu'à la polymérisation partielle du silicone recouvrant l'objet à protéger avant formation de l'enveloppe fibreuse, puis, après revêtement de ladite enveloppe fibreuse par un élastomère de silicone non chargé, on procède à une polymérisation totale du revêtement de silicone recouvrant ledit objet et du revêtement de silicone recouvrant ladite enveloppe fibreuse.

Les figures du dessin annexé feront bien comprendre comment l'invention peut être réalisée. Sur ces figures, des références identiques désignent des éléments semblables.

La figure 1 est une vue en coupe transversale d'un tube pourvu d'une protection antifeu conforme à la présente invention, ladite coupe correspondant à la ligne I-I de la figure 3.

La figure 2 illustre, également en coupe transversale, une variante de réalisation de la protection antifeu montrée par la figure 1.

La figure 3 est une vue de dessus illustrant des essais de résistance au feu, auxquels ont été soumis les tubes des figures 1 ou 2.

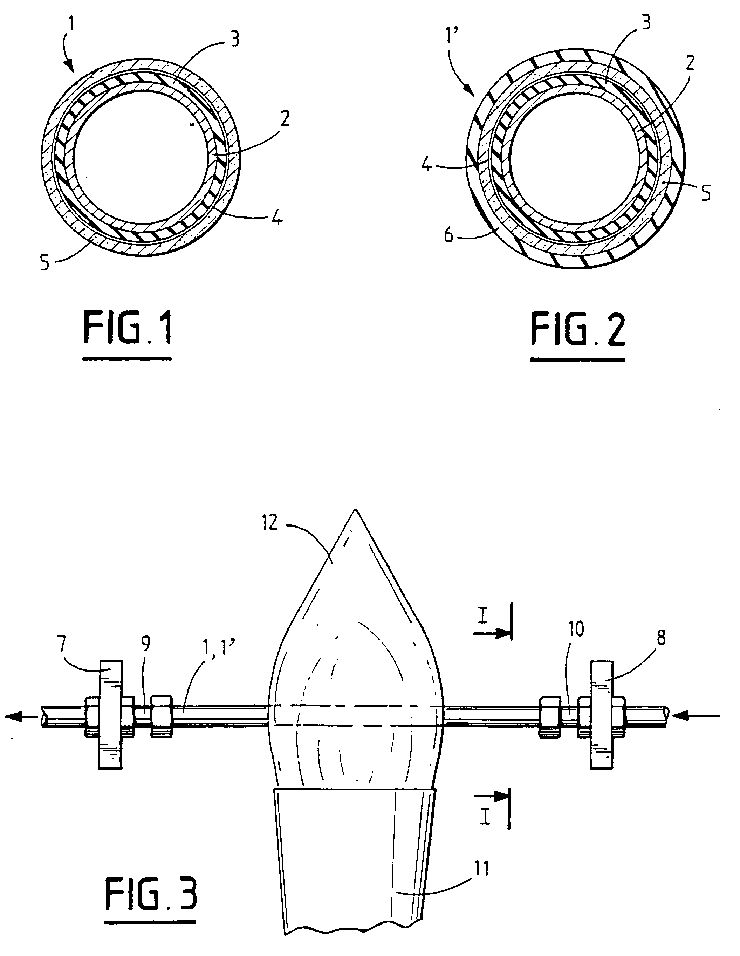

Le tube protégé 1, représenté en coupe transversale sur la figure 1 et conforme à l'invention, comporte un tube à protéger 2 (par exemple en acier, notamment inoxydable) et une protection antifeu 3, 4, 5.

Le tube à protéger 2 porte, sur sa face extérieure, un revêtement 3 de silicone ne comportant aucune charge endothermique et adhérant audit tube 2.

Le revêtement de silicone 3 est recouvert d'une enveloppe 5 de fibres résistant au feu. L'enveloppe fibreuse 5 est portée par le revêtement de silicone 3, sans y adhérer, ce qui est représenté schématiquement sur les figures 1 et 2 par un jeu 4.

Pour réaliser la protection antifeu 3, 4, 5 conforme à la présente invention, on opère de la façon suivante :
a - On revêt la surface extérieure du tube 2 d'un élastomère de silicone, ne comportant aucune charge endothermique et se présentant sous forme pâteuse. Cet élastomère de silicone peut être celui connu commercialement sous la référence RTV 141 de la Société RHONE-POULENC. Il peut être appliqué sur le tube 2 de toute manière appropriée ; cependant, de préférence, il est projeté à l'aide d'un pistolet pneumatique. De par sa consistance pâteuse, l'élastomère de silicone adhère naturellement à la surface du tube 2. Cependant, éventuellement, pour assurer l'adhérence de l'élastomère de silicone sur le tube 2, il est possible d'appliquer sur celui-ci un produit d'accrochage, tel qu'un primaire siliconé, avant l'application de l'élastomère de silicone. L'épaisseur de l'élastomère de silicone appliqué sur le tube 2 est déterminée par l'efficacité de la protection thermique désirée.
b - Après obtention de l'épaisseur désirée pour l'élastomère de silicone, on procède à la polymérisation à froid de celui-ci, de façon à obtenir le revêtement de silicone 3, adhérant audit tube 2.
c - Ensuite, sur le revêtement de silicone 3 ainsi partiellement polymérisé, on réalise l'enveloppe fibreuse 5. Celle-ci peut être formée par enroulement, par exemple à spires jointives, d'une bande constituée d'un tissu ou d'une tresse de fibres de verre, de céramique, d'alumine, etc ... L'enveloppe fibreuse 5 peut être constituée de plusieurs couches superposées d'une telle bande enroulée. L'épaisseur de l'enveloppe fibreuse 5 est choisie en fonction de la résistance au feu désirée. On remarquera que, grâce à la polymérisation à froid de l'élastomère de silicone, préalablement à l'enroulement de la bande de fibres résistant au feu, ladite enveloppe fibreuse n'adhère pas au revêtement 2, comme cela est illustré schématiquement par le jeu 4.
d - Enfin, le tube 2 portant la protection 3, 4, 5 est introduit dans un four, pour procéder à la polymérisation totale définitive du silicone pour donner à celui-ci ses caractéristiques mécaniques optimales.

Pour tester la résistance au feu de la protection conforme à la présente invention, on a effectué les essais comparatifs suivants, au moyen de quatre éprouvettes différentes.

La première éprouvette était formée par un tronçon de tube inoxydable 2, de 9,5 mm de diamètre, faisant partie d'une tuyauterie hydraulique à haute pression destinée à la commande de l'inverseur de poussée du moteur d'avion CFM 56 5C2, ledit tronçon de tube ne comportant aucun revêtement de protection.

La deuxième éprouvette était constituée par un tronçon de tube 2, identique à celui de la première éprouvette, mais logé dans une gaine de silicone préfabriquée de 4 mm d'épaisseur, conformément à la technique connue.

La troisième éprouvette, conforme à la présente invention, comportait le même tronçon de tube que les deux premières éprouvettes, mais était recouvert d'un revêtement 3 de silicone de 2,5 mm d'épaisseur, lui-même recouvert d'une enveloppe fibreuse de 1,5 mm d'épaisseur. Cette enveloppe fibreuse était constituée par une bande tressée de fibres céramiques de 0,5 mm d'épaisseur enroulée hélicoïdalement sur le revêtement 3 de silicone en trois couches superposées et à enroulements croisés.

La quatrième éprouvette, également conforme à la présente invention, était identique à la troisième éprouvette, mais comportait, de plus, un revêtement extérieur 6 de silicone de 1 mm d'épaisseur.

Chacune des quatre éprouvettes a subi le test illustré sur la figure 3, c'est-à-dire qu'elle a été raccordée à ses extrémités à des raccords 9 et 10, supportés par des colonnes 7 et 8 et alimentant ledit tube 2 avec un fluide hydraulique sous une pression de 206 bars, et qu'elle a été soumise à la flamme 12 d'un brûleur 11, ladite flamme étant à une température de 1100°C.

La première éprouvette s'est rompue après 6 mn, et la seconde après 9 mn. En revanche, les troisième et quatrième éprouvettes ont supporté 25 mn d'exposition à la flamme 12, sans se rompre.

## Revendications

1. Procédé pour la réalisation d'une protection antifeu (3, 4, 5) à base de silicone,
comportant les étapes suivantes :
a) on revêt un objet (2) à protéger d'un élastomère de silicone non chargé, se présentant sous une forme pâteuse et adhérant audit objet (2) ;
b) on procède à la polymérisation au moins partielle de l'élastomère de silicone dont est ainsi revêtu ledit objet ; après quoi
c) on revêt le revêtement de silicone (3) au moins partiellement polymérisé ainsi obtenu d'une enveloppe fibreuse (5) résistant au feu et n'adhérant pas audit revêtement de silicone (3).

2. Procédé selon la revendication 1,
caractérisé en ce que ledit élastomère de silicone est appliqué sur ledit objet (2) par projection au pistolet.

3. Procédé selon l'une des revendications 1 ou 2,
caractérisé en ce que la polymérisation prévue à l'étape b) est une polymérisation partielle et en ce que, après l'étape c) de réalisation de l'enveloppe fibreuse, on procède à une polymérisation totale dudit revêtement de silicone (3).

4. Procédé selon l'une des revendications 1 à 3,
caractérisé en ce que l'enveloppe fibreuse (5) est réalisée par enroulement hélicoïdal d'une bande tressée de fibres résistant au feu.

5. Procédé selon l'une des revendications 1 ou 2,
caractérisé en ce que, après réalisation de l'enveloppe fibreuse (5), on revêt au moins partiellement ladite enveloppe fibreuse d'un élastomère de silicone non chargé.

6. Procédé selon la revendication 5,
caractérisé en ce que ledit élastomère de silicone est appliqué sur ladite enveloppe fibreuse (5) par projection au pistolet.

7. Procédé selon l'une des revendications 5 ou 6,
caractérisé en ce que la polymérisation prévue à l'étape b) est une polymérisation partielle et en ce que, après revêtement de ladite enveloppe fibreuse par un élastomère de silicone non chargé, on procède à une polymérisation totale du revêtement de silicone recouvrant ledit objet et du revêtement de silicone recouvrant ladite enveloppe fibreuse.

8. Protection antifeu à base de silicone appliquée sur la surface extérieure d'un objet à protéger,
- un revêtement interne (3) de silicone non chargé appliqué sous une forme pâteuse et polymérisé, adhérant à ladite surface extérieure dudit objet (2) ; et
- une enveloppe fibreuse (5), résistant au feu et portée par ledit revêtement interne (3), sans y adhérer.

9. Protection antifeu selon la revendication 8,
caractérisée en ce qu'elle comporte de plus un revêtement externe (6) de silicone non chargé polymérisé, recouvrant au moins partiellement ladite enveloppe fibreuse (5).

## Patentansprüche

1. Verfahren zur Herstellung eines Feuerschutzes (3, 4, 5) auf Siliconbasis,
das folgende Stufen umfaßt:
a) Ein zu schützender Gegenstand (2) wird mit einem Siliconelastomer ohne Füllstoff überzogen, das die Form einer Paste hat und am Gegenstand (2) haftet;
b) dann wird das Siliconelastomer, mit dem der Gegenstand so überzogen ist, zumindest teilpolymerisiert, und
c) danach wird der so erhaltene zumindest teilpolymerisierte Siliconüberzug (3) mit einer feuerbeständigen Faserumhüllung (5) überzogen, die am Siliconüberzug (3) nicht haftet.

2. Verfahren nach Anspruch 1,
dadurch gekennzeichnet, daß das Siliconelastomer mit einer Spritzpistole auf den Gegenstand (2) aufgetragen wird.

3. Verfahren nach einem der Ansprüche 1 oder 2,
dadurch gekennzeichnet, daß die in Stufe b) vorgesehene Polymerisation eine Teilpolymerisation ist, und dadurch, daß nach der Stufe c) zur Herstellung der Faserumhüllung eine vollständige Polymerisation des Siliconüberzugs (3) vorgenommen wird.

4. Verfahren nach einem der Ansprüche 1 bis 3,
dadurch gekennzeichnet, daß die Faserumhüllung (5) durch spiralförmiges Umwickeln mit einem Flechtband aus feuerbeständigen Fasern hergestellt wird.

5. Verfahren nach einem der Ansprüche 1 oder 2,
dadurch gekennzeichnet, daß die Faserumhüllung (5) nach ihrer Herstellung zumindest teilweise mit einem Siliconelastomer ohne Füllstoff überzogen wird.

6. Verfahren nach Anspruch 5,
dadurch gekennzeichnet, daß das Siliconelastomer auf die Faserumhüllung (5) mit einer Spritzpistole aufgetragen wird.

7. Verfahren nach einem der Ansprüche 5 oder 6,
dadurch gekennzeichnet, daß die Polymerisation von Stufe b) eine Teilpolymerisation ist und daß, nachdem die Faserumhüllung mit einem Siliconelastomer ohne Füllstoff überzogen wurde, eine vollständige Polymerisation des Siliconüberzugs auf dem Gegenstand und des Siliconüberzugs auf der Faserumhüllung vorgenommen wird.

8. Feuerschutz auf Siliconbasis,
der auf der Außenfläche eines zu schützenden Gegenstands aufgetragen ist und umfaßt:
- einen inneren Überzug (3) aus Silicon ohne Füllstoff, der pastenförmig aufgetragen wurde, polymerisiert ist und an der Außenfläche des Gegenstands (2) haftet; und
- eine feuerbeständige Faserumhüllung (5) auf dem inneren Überzug (3), an dem diese nicht haftet.

9. Feuerschutz nach Anspruch 8,
dadurch gekennzeichnet, daß er außerdem einen polymerisierten äußeren Überzug (6) aus Silicon ohne Füllstoff hat, der zumindest teilweise die Faserumhüllung (5) bedeckt.

## Claims

1. A method for the production of a silicone-based fireproof protection means (3, 4, 5), which includes the following steps:
a) an object (2) to be protected is coated with an unfilled silicone elastomer, being in the form of a paste and adhering to said object (2);
b) the silicone elastomer, with which said object is thus coated, is at least partially polymerized; after which
c) the at least partially polymerized silicone coating (3) thus obtained is coated with a fire-resistant fibrous jacket (5) which does not adhere to said silicone coating (3).

2. The method as claimed in claim 1, characterized in that said silicone elastomer is applied to said object (2) by spraying with a gun.

3. The method as claimed in either of claims 1 and 2, characterized in that the polymerization provided in step b) is a partial polymerization and in that, after step c) for producing the fibrous jacket, complete polymerization of said silicone coating (3) is carried out.

4. The method as claimed in one of claims 1 to 3, characterized in that the fibrous jacket (5) is produced by helically winding a braided sheet of fire-resistant fibers.

5. The method as claimed in either of claims 1 and 2, characterized in that, after producing the fibrous jacket (5), said fibrous jacket is coated, at least partially, with an unfilled silicone elastomer.

6. The method as claimed in claim 5, characterized in that said silicone elastomer is applied to said fibrous jacket (5) by spraying with a gun.

7. The method as claimed in either of claims 5 and 6, characterized in that the polymerization provided in step b) is a partial polymerization and in that, after coating said fibrous jacket with an unfilled silicone elastomer, complete polymerization of the silicone coating covering said object and of the silicone coating covering said fibrous jacket is carried out.

8. A silicone-based fireproof protection means applied to the external surface of an object to be protected, and including:
- an unfilled silicone inner coating (3) applied in the form of a paste and polymerized adhering to said external surface of said object (2) ; and
- a fibrous, fire-resistant jacket (5) carried by said inner coating (3) but not adhering to it.

9. The fireproof protection means as claimed in claim 8, characterized in that it includes, in addition, an outer polymerized unfilled silicone coating (6) covering said fibrous jacket (5), at least partially.
